# EUROPÄISCHE PATENTANMELDUNG

(11) **EP 3 836 365 A1**
(43) Veröffentlichungstag der Anmeldung: **16.06.2021**
(21) Anmeldenummer: 20213185.0
(22) Anmeldetag: 10.12.2020
(51) Int. Cl.: H02K 5/04, H02K 7/116, F16K 27/00, F16K 31/04, H02K 5/10, H02K 5/22

(54) **STELLANTRIEB**

(30) Priorität: 13.12.2019 DE 102019134365
(71) Anmelder: AUMA Riester GmbH & Co. KG, 79379 Müllheim (DE)
(72) Erfinder: Hofmann, Dr. Benjamin, 79423 Heitersheim (DE)
(74) Vertreter: Mertzlufft-Paufler, Cornelius

(57) **Zusammenfassung**

Die Erfindung befasst sich mit Verbesserungen auf dem technischen Gebiet der Stellantriebe. Hierzu wird unter anderem ein Stellantrieb (1) vorgeschlagen, dessen Stellantriebsgehäuse (2) zumindest ein Stellantriebsgehäuseteil (3) oder (4) aufweist. Innerhalb des Stellantriebsgehäuses (2) ist wenigstens ein Bauteilträger (5) oder (6) angeordnet, der als Tragstruktur für zumindest ein Funktionselement des Stellantriebs dient. An dem Bauteilträger (5) oder (6) ist ferner das zumindest eine Stellantriebsgehäuseteil (3) oder (4) befestigt (vgl. Fig. 1).

## Beschreibung

Die Erfindung betrifft Stellantriebe, die in verschiedenen Ausführungsformen aus dem Stand der Technik und der Praxis vorbekannt sind.

Stellantriebe weisen in der Regel ein Stellantriebsgehäuse auf, in dem zumindest ein Funktionselement, beispielsweise ein stellantriebsmechanisches Funktionselement des Stellantriebs angeordnet ist. Stellantriebsmechanische Funktionselemente können beispielsweise ein Antriebsmotor und/oder ein Getriebe sein. Stellantriebe werden unter anderem dazu verwendet, Armaturen und/oder Ventile zu betätigen.

Die Stellantriebsgehäuse aus der Praxis vorbekannter Stellantriebe sind in der Regel aus Aluminiumguss und/oder Grauguss hergestellt. Dadurch sind die Stellantriebsgehäuse im Allgemeinen sehr stabil und können die in ihnen angeordneten Funktionselemente gut vor äußeren Einflüssen schützen. Durch ihre Stabilität sind die vorbekannten Stellantriebsgehäuse auch in der Lage beim Betrieb auf die Stellantrieb wirkenden Kräfte aufzunehmen. Diese an sich vorteilhaften Eigenschaften sind allerdings mit einem gewissen Aufwand in der Herstellung der Stellantriebsgehäuse verbunden. Auch die Montage, Wartung und/oder der Austausch der innerhalb der Stellantriebsgehäuse angeordneten Funktionselemente gestaltet sich aufgrund der Konstruktion der Stellantriebgehäuse oftmals vergleichsweise schwierig.

Aufgabe der Erfindung ist es daher, Stellantriebe der eingangs genannten Art zu schaffen, deren Herstellung und Handhabung vereinfacht ist.

Zur Lösung der Aufgabe wird zunächst ein Stellantrieb mit den Mitteln und Merkmalen des ersten unabhängigen Anspruchs vorgeschlagen, der auf einen derartigen Stellantrieb gerichtet ist. Zur Lösung der Aufgabe wird somit insbesondere ein Stellantrieb mit einem wenigstens ein vorzugsweise topfförmiges Stellantriebsgehäuseteil umfassenden Stellantriebsgehäuse vorgeschlagen, wobei der Stellantrieb wenigstens einen innerhalb des Stellantriebsgehäuses angeordneten Bauteilträger aufweist, der zumindest ein insbesondere stellantriebsmechanisches Funktionselement des Stellantriebs trägt, und an dem das wenigstens eine Stellantriebsgehäuseteil befestigt ist.

Bei den aus der Praxis bisher vorbekannten Stellantrieben werden die innerhalb der Stellantriebsgehäuse angeordneten Funktionselemente durch die Stellantriebsgehäuse nicht nur geschützt, sondern auch durch diese getragen. Bei dem erfindungsgemäßen Stellantrieb ist der Bauteilträger vorgesehen, der das zumindest eine Funktionselement des Stellantriebs trägt. Auf diese Weise ist es möglich, das zumindest eine Funktionselement, beispielsweise einen Antriebsmotor und/oder ein Getriebe des Stellantriebs, an den Bauteilträger zu montieren, bevor dieser in das zumindest eine vorzugsweise topfförmige Stellantriebsgehäuseteil eingebracht wird. Dies erleichtert die Montage und bei Bedarf auch den Austausch oder eine Reparatur oder Wartung des zumindest einen an dem Bauteilträger angeordneten Funktionselements, das in seiner Gebrauchsstellung durch das Stellantriebsgehäuses eingehaust und dort an sich nur schwer zugänglich ist.

Bei einer bevorzugten Ausführungsform des Stellantriebs weist das Stellantriebsgehäuse zwei jeweils topfförmige Stellantriebsgehäuseteile auf. Nach Montage des zumindest einen Funktionselements des Stellantriebs an dem Bauteilträger kann der Bauteilträger mit dem zumindest einen daran angeordneten stellantriebsmechanischen Element zunächst in das eine topfförmige Stellantriebsgehäuseteil eingesetzt werden. Im Anschluss daran kann das Stellantriebsgehäuse durch Aufsetzen des zumindest einen weiteren topfförmigen Stellantriebsgehäuseteils geschlossen und der Bauteilträger mit dem zumindest einen daran angeordneten Funktionselement eingehaust werden.

Somit fungiert der Bauteilträger als innere Haltestruktur für das zumindest eine Funktionselement und nach Schließen des Stellantriebsgehäuses auch für das zumindest eine an dem Bauteilträger angeordnete Stellantriebsgehäuseteil.

Die Tragfunktion wird bei dem erfindungsgemäßen Stellantrieb nun nicht mehr von dem Stellantriebsgehäuse, sondern von dem darin angeordneten Bauteilträger übernommen. So kann das Stellantriebsgehäuse, insbesondere das zumindest eine vorzugsweise topfförmige Stellantriebsgehäuseteil, einfacher gestaltet sein, beispielsweise mit geringerem Materialaufwand.

Zur Lösung der Aufgabe wird auch ein Stellantrieb mit den Mitteln und Merkmalen des zweiten unabhängigen, auf einen derartigen Stellantrieb gerichteten Anspruchs vorgeschlagen. Zur Lösung der Aufgabe wird somit insbesondere ein Stellantrieb vorgeschlagen, bei dem zumindest ein vorzugsweise topfförmiges Stellantriebsgehäuseteil eines Stellantriebsgehäuses des Stellantriebs aus einem dünnwandigen Material mit einer Materialstärke von höchstens vier Millimetern, insbesondere von höchstens zwei Millimetern, hergestellt ist. Es ist auch möglich, dass zumindest ein Stellantriebsgehäuseteil des Stellantriebsgehäuses aus einem Metallblech, insbesondere aus einem Edelstahlblech besteht. Es ist auch möglich, dass zumindest ein Stellantriebsgehäuseteil des Stellantriebsgehäuses des Stellantriebs aus Kunststoff besteht. Vor allem ein aus Kunststoff bestehendes Stellantriebsgehäuseteil kann eine Materialstärke, die auch als Wandstärke bezeichnet werden kann, von höchstens vier Millimetern aufweisen.

Auf diese Weise wird ein Stellantrieb mit einem Stellantriebsgehäuse geschaffen, das einfach und vor allem kostengünstig herzustellen ist.

Gemäß einer Ausführungsform des Stellantriebs ist vorgesehen, dass dieser die Merkmale der beiden ersten auf einen Stellantrieb gerichteten Ansprüche miteinander kombiniert.

Bei einer Ausführungsform des zuvor erwähnten Stellantriebs ist vorgesehen, dass der Bauteilträger oder ein weiterer Bauteilträger einen Befestigungsflansch aufweist, an dem das zumindest eine Stellantriebsgehäuseteil des Stellantriebsgehäuses befestigt ist. Auf diese Weise kann der Bauteilträger auch als Tragstruktur für zumindest einen Teil des Stellantriebsgehäuses verwendet werden.

Bei einem Stellantriebsgehäuse, das zumindest zwei Stellantriebsgehäuseteile umfasst, kann vorgesehen sein, dass der Bauteilträger einen Befestigungsflansch aufweist, an dem die zumindest zwei Stellantriebsgehäuseteile des Stellantriebsgehäuses befestigt sind.

Um eine Verbindungsstelle zwischen dem Befestigungsflansch und dem zumindest einen Stellantriebsgehäuseteil abdichten zu können, kann es zweckmäßig sein, wenn zwischen dem Befestigungsflansch und dem zumindest einen Stellantriebsgehäuse eine Dichtung, insbesondere ein O-Ring angeordnet ist. Bei mehreren Stellantriebsgehäuseteilen, die mit dem Befestigungsflansch des Bauteilträgers verbunden sind, kann zwischen jedem der Stellantriebsgehäuseteile und dem Befestigungsflansch jeweils eine derartige Dichtung, insbesondere jeweils ein O-Ring angeordnet sein.

Ferner ist es möglich, dass der Bauteilträger an einem Topfboden eines, beispielsweise des bereits zuvor erwähnten Stellantriebsgehäuseteils des Stellantriebsgehäuses angeordnet, insbesondere dort befestigt ist.

Der Bauteilträger des Stellantriebs kann ferner ein Lager für eine Abtriebswelle des Stellantriebs bilden und/oder ein solches aufweisen. Auf diese Weise kann auf ein separates Lager zur Lagerung der Abtriebswelle innerhalb des Stellantriebsgehäuses verzichtet werden. Auch dies kann die Konstruktion des Stellantriebsgehäuses vereinfachen.

Bei einer Ausführungsform des Stellantriebs ist vorgesehen, dass als stellantriebsmechanisches Element ein Antriebsmotor des Stellantriebs an dem Bauteilträger abgestützt und/oder angeordnet ist. Der Antriebsmotor des Stellantriebs kann insbesondere mit seinem Motorgehäuse an dem Bauteilträger abgestützt und/oder angeordnet sein. Ferner ist es möglich, dass das wenigstens eine Stellantriebsgehäuseteil in Bezug auf ein von einem, beispielsweise dem zuvor erwähnten Antriebsmotor entwickeltes Antriebsmoment unbelastet ist. Der Bauteilträger kann somit nicht nur eine stützende, sondern auch eine kraftleitende Struktur des Stellantriebs sein. Das zumindest eine Stellantriebsgehäuseteil kann somit weitgehend unbelastet bleiben und folgerichtig vergleichsweise filigran ausgebildet sein. Dies begünstigt eine einfache und kostengünstige Herstellung des zumindest einen Stellantriebsgehäuseteils.

Der Bauteilträger des Stellantriebs kann das Stellantriebsgehäuse durchgreifen. So kann der Bauteilträger aus dem Stellantriebsgehäuse ragen. Hierbei kann der Bauteilträger insbesondere an seinem aus dem Stellantriebsgehäuse ragenden Abschnitt eine Montageschnittstelle für eine Armatur und/oder für ein Folgegetriebe aufweisen. Auf diese Weise wird es möglich, eine Verbindung zwischen dem Stellantrieb und einem Folgegetriebe oder einer Armatur direkt über den als tragende Struktur dienenden Bauteilträger herzustellen und das Stellantriebsgehäuse weitgehend nicht zu belasten. Auch dies begünstigt eine möglichst filigrane Gestaltung des zumindest einen Stellantriebsgehäuseteil des Stellantriebsgehäuses. Wenigstens ein Bauteilträger des Stellantriebs kann als Elektronikträger ausgebildet sein. Wenigstens ein Bauteilträger des Stellantriebs kann als Motorträger ausgebildet sein. Es ist auch möglich, dass der Stellantrieb einen Bauteilträger aufweist, der als Elektronikträger, als Träger für stellantriebsmechanische Funktionselemente des Stellantriebs und/oder als Motorträger ausgebildet ist.

An dem Elektronikträger können elektronische Bauteile, insbesondere eine Steuerplatine des Stellantriebs angeordnet sein. Der Motorträger kann zur Aufnahme eines Antriebsmotors des Stellantriebs dienen, sofern der Antriebsmotor des Stellantriebs nicht an dem Bauteilträger angeordnet ist. Sowohl der Elektronikträger als auch der Motorträger können innerhalb des Stellantriebsgehäuses angeordnet sein. Ebenso können der Elektronikträger und/oder der Motorträger an dem Bauteilträger angeordnet und/oder an diesem befestigt und/oder mit diesem verbunden sein.

Ein Bauteilträger kann als Fundament für weitere Träger für Funktionseinheiten des Stellantriebs dienen, ohne dass die weiteren Funktionseinheiten, wie beispielsweise der Antriebsmotor und/oder elektronische Bauteile des Stellantriebs von dem Stellantriebsgehäuse gehalten werden müssten. Bei Verwendung eines separaten Motorträgers, der mit dem Bauteilträger verbunden sein kann, ist es möglich, an dem Bauteilträger beispielsweise nur eine oder auch mehrere Getriebestufen des Stellantriebs anzuordnen.

Der Stellantrieb kann ferner ein axiales Ausgleichselement beispielsweise für zumindest ein stellantriebsmechanisches Element des Stellantriebs aufweisen. Das axiale Ausgleichselement kann dabei beispielsweise an dem Bauteilträger angeordnet oder ausgebildet sein. Als axiales Ausgleichselement kann eine Axialfeder dienen. Mit Hilfe des zumindest einen axialen Ausgleichselements lässt sich eine Überbestimmung beim Schließen des Stellantriebsgehäuses vermeiden. Zudem können mit Hilfe des zumindest einen axialen Ausgleichselements Fertigungs- oder Passungstoleranzen von innerhalb des Stellantriebsgehäuses angeordneten Elemente ausgeglichen werden.

Als Funktionselemente können stellantriebsmechanische Elemente wie beispielsweise ein Antriebsstrang, ein Getriebestrang, ein Getriebe und/oder ein Antriebsmotor des Stellantriebs vorgesehen sein.

An dieser Stelle sei erwähnt, dass der wenigstens eine Bauteilträger mehrteilig ausgebildet sein kann. Ferner ist es möglich, dass der Bauteilträger an wenigstens zwei axial zueinander beabstandeten Stellen mit dem zumindest einem Stellantriebsgehäuseteil des Stellantriebsgehäuses des Stellantriebs verbunden ist.

Ein Bauteilträger, beispielsweise der bereits zuvor erwähnte Elektronikträger kann zumindest abschnittsweise jenseits einer Trennebene von zumindest zwei Stellantriebsgehäuseteilen angeordnet sein. Ein separater Elektronikträger kann, wie bereits zuvor erwähnt, hierbei an dem Bauteilträger des Stellantriebs angeordnet sein. So ist es möglich, dass der Elektronikträger für einen Anwender des Stellantriebs zugänglich ist, wenn eines der zumindest zwei Stellantriebsgehäuseteile von dem zumindest einen anderen Stellantriebsgehäuseteil abgenommen ist. So können bei einem geöffneten Stellantriebsgehäuse Einstellungen an der an dem Elektronikträger angeordneten Elektronik des Stellantriebs vorgenommen werden, ohne dass der Bauteilträger aus dem anderen Stellantriebsgehäuseteil entfernt werden müsste. Auf diese Weise kann das eine Stellantriebsgehäuseteil des Stellantriebsgehäuses also als Kappe oder Abdeckung fungieren, die bei Bedarf von dem anderen Stellantriebsgehäuseteil abgenommen werden kann, falls Zugriff auf die Elektronik des Stellantriebs erforderlich sein sollte.

Wenigstens ein, beispielsweise der wenigstens eine Bauteilträger kann das zumindest eine Stellantriebsgehäuseteil axial durchgreifen und eine Flanschfläche für einen Armaturenflansch ausbilden. So ist es möglich, den Stellantrieb über die an dem Bauteilträger ausgebildete Flanschfläche an einem Armaturenflansch zu befestigen. Da eine Krafteinleitung hierbei über den Bauteilträger erfolgt, können auch hierdurch Belastungen des Stellantriebsgehäuses weitgehend vermieden werden.

Das Stellantriebsgehäuse kann mit einer Dichtung, insbesondere mit einem O-Ring, abgedichtet sein. Hierbei kann die Dichtung entlang einer umlaufenden Linie angeordnet sein, insbesondere wobei die umlaufende Linie durch eine Abbiegung eines vorzugsweise topfförmigen Stellantriebsgehäuseteils des Stellantriebs gebildet sein kann. Auf diese Weise kann die Dichtung besonders zuverlässig an dem zumindest einen Stellantriebsgehäuseteil festgelegt werden. Wird das Stellantriebsgehäuseteil abgenommen, bleibt die Dichtung an dem Bauteilträger fixiert, wodurch ein unbeabsichtigter Verlust der Dichtung beziehungsweise ihre separate Handhabung vermieden werden können.

Bevorzugt ist das zumindest eine topfförmige Stellantriebsgehäuseteil aus dünnwandigem Material besteht. Dies begünstigt die Herstellung des topfförmigen Stellantriebsgehäuseteils beispielsweise durch Tiefziehen.

Bei einem Stellantriebgehäuse, das aus zumindest zwei Stellantriebsgehäuseteilen besteht, können die zumindest zwei Stellantriebsgehäuseteile mittels wenigstens eines Spannmittels miteinander und/oder mit dem wenigstens einen Bauteilträger, insbesondere mit seinem Befestigungsflansch, verbunden sein. Mit Hilfe des wenigstens einen Spannmittels ist es möglich, die Stellantriebsgehäuseteile des Stellantriebsgehäuses auf vergleichsweise einfache Art und Weise miteinander zu verbinden. Je nach Ausbildung des zumindest einen Spannmittels kann dies sogar werkzeuglos geschehen. Als Spannmittel kann ein Spannverschluss verwendet werden.

Das zumindest eine Stellantriebsgehäuseteil kann einen Flansch aufweisen. Mit Hilfe des Flansches ist es möglich, das zumindest eine Stellantriebsgehäuseteil mit dem Bauteilträger zu verbinden. Bei einem Stellantriebsgehäuse, das zumindest zwei Stellantriebsgehäuseteile umfasst, kann es zweckmäßig sein, wenn beide Stellantriebsgehäuseteile jeweils einen Flansch aufweisen. Auf diese Weise ist es möglich, beide Stellantriebsgehäuseteile mit dem Bauteilträger des Stellantriebs zu verbinden. Hierzu können die Flansche der beiden Stellantriebsgehäuseteile beispielsweise mit dem Befestigungsflansch des Bauteilträgers verbunden werden.

Der Flansch/die Flansche können jeweils wenigstens einen randseitig offenen Schlitz zur Aufnahme einer Spannschraube eines Spannmittels aufweisen. Mit dem zumindest einen Spannmittel, beispielsweise mit einem Spannverschluss, können das zumindest eine Stellantriebsgehäuseteil mit dem Bauteilträger und/oder die zumindest zwei Stellantriebsgehäuseteile miteinander und/oder mit dem Bauteilträger des Stellantriebs verbunden werden.

Das zuvor erwähnte Spannmittel kann eine Halteklammer, eine mit der Halteklammer gehaltene Rundmutter und eine Spannschraube umfassen. Die Rundmutter kann dabei in der Halteklammer drehbar sein, um die Spannschraube in eine Spannstellung zu bewegen. Mit Hilfe der Halteklammer kann das Spannmittel an dem zumindest einen Stellantriebsgehäuseteil angeordnet sein. Hierzu kann es vorteilhaft sein, wenn zumindest eine Stellantriebsgehäuseteil des Stellantriebsgehäuses einen Haltewulst und/oder eine Haltebördelung für die Halteklammer aufweist. Der Haltewulst und/oder die Haltebördelung für die Halteklammer können dabei beispielsweise an einem, zum Beispiel an dem bereits zuvor erwähnten Flansch des Stellantriebsgehäuseteils ausgebildet sein.

Die Halteklammer kann ferner eine vorzugsweise mittige Aussparung aufweisen. So ist es möglich, die Rundmutter mit der Spannschraube innerhalb der Halteklammer zwischen einer Offenstellung und einer, beispielsweise der bereits zuvor erwähnten Spannstellung zu bewegen. Hierzu muss die Halteklammer nicht von dem zumindest einen Stellantriebsgehäuseteil abgenommen werden. In Spannstellung kann die Spannschraube sowohl einen Schlitz an dem einen Stellantriebsgehäuseteil als auch einen anderen Schlitz an einem anderen Stellantriebsgehäuseteil und/oder einen Schlitz an einem, beispielsweise dem bereits zuvor erwähnten Befestigungsflansch des Stellantriebs durchsetzen. Nach Spannen des Spannmittels, insbesondere der Spannschraube, kann eine formschlüssige und/oder kraftschlüssige Verbindung zwischen dem zumindest einem Stellantriebsgehäuseteil, einem weiteren Stellantriebsgehäuseteil und/oder dem bereits zuvor erwähnten Bauteilträger des Stellantriebs hergestellt sein.

Zur Lösung der Aufgabe wird des Weiteren ein Stellantrieb vorgeschlagen, der die Mittel und Merkmale des dritten, auf einen derartigen Stellantrieb gerichteten unabhängigen Anspruchs aufweist. So wird zur Lösung der Aufgabe insbesondere vorgeschlagen, dass ein, beispielsweise das bereits zuvor erwähnte Stellantriebsgehäuse des Stellantriebs ein Montagefenster zur Durchführung eines Anschlusskabels aus dem Inneren des Stellantriebsgehäuses aufweist.

Das Montagefenster kann vorzugsweise in einem Stellantriebsgehäuseteil des Stellantriebsgehäuses ausgebildet sein. Mit Hilfe des Montagefensters ist es möglich, den elektrischen Anschluss des Stellantriebs deutlich zu vereinfachen. Durch das vergleichsweise große Montagefenster ist es nämlich möglich, ein Anschlusskabel ohne größere Schwierigkeiten aus dem Inneren des Stellantriebsgehäuses herauszuführen.

Der Stellantrieb kann eine Verschlussblende aufweisen, die zumindest eine Kabeldurchführung für ein Anschlusskabel umfasst und mit der das Montagefenster nach Montage des Stellantriebs verschließbar und/oder verschlossen ist. Sobald das zumindest eine Anschlusskabel durch das Montagefenster nach außen geführt wurde können das Anschlusskabel durch die Kabeldurchführung der Verschlussblende geführt und dann das Montagefenster mit der Verschlussblende verschlossen werden.

Dabei kann es vorteilhaft sein, wenn die Verschlussblende von außen lösbar und/oder vollständig entfernbar ist. So lässt sich die Verschlussblende vergleichsweise einfach von außen entfernen, ohne dass das Stellantriebsgehäuse des Stellantriebs dazu geöffnet werden müsste. Dies kann den Zugriff auf den elektrischen Anschluss und das elektrische Anschlusskabel des Stellantriebs erheblich vereinfachen.

Die Verschlussblende kann dabei zumindest ein Be- und/oder Entlüftungsloch aufweisen. Auf diese Weise ist ein Austausch zwischen dem Inneren des Stellantriebsgehäuse und der Umgebung möglich. So kann beispielsweise Luftfeuchtigkeit aus dem Inneren des Stellantriebsgehäuses nach außen entweichen. Das Be- und/oder Entlüftungsloch kann mit einem Druckausgleichselement versehen sein, das luftdurchlässig und/oder dampfdurchlässig, jedoch wasserundurchlässig ist. Auf diese Weise ist ein Durchtritt von Luft, insbesondere von feuchter Luft durch das Be- und/oder Entlüftungsloch möglich, während flüssiges Wasser das Be- und/oder Entlüftungsloch nicht passieren kann.

Die zumindest eine Kabeldurchführung der Verschlussblende kann als Kabelverschraubung ausgebildet sein. Bei einer anderen Ausführungsform kann zumindest eine Kabeldurchführung der Verschlussblende als Steckverbindung ausgebildet sein. Auf diese Weise werden unterschiedliche Anschlussmöglichkeiten zur Herstellung des elektrischen Anschlusses des Stellantriebs bereitgestellt.

Bei einer Ausführungsform des Stellantriebs kann das Stellantriebsgehäuse einen außenseitigen Gehäusekasten aufweisen. Der Gehäusekasten kann ein, beispielsweise das zuvor bereits erwähnte Montagefenster außenseitig umgeben. Der Gehäusekasten kann zur Aufnahme von Funktionselementen des Stellantriebs dienen, die innerhalb des Stellantriebsgehäuses aufgrund der gegebenen Platzverhältnisse nicht untergebracht werden können. Innerhalb des Gehäusekastens lassen sich insbesondere elektrische und/oder elektronische Funktionselemente des Stellantriebs räumlich getrennt von dem inneren des Stellantriebsgehäuses unterbringen.

Nachfolgend sind Ausführungsbeispiele der Erfindung anhand der Figuren näher beschrieben. Es sei erwähnt, dass sich die Erfindung nicht auf die in den Figuren gezeigten Ausführungsbeispiele beschränkt. Weitere Ausführungsbeispiele der Erfindung ergeben sich durch Kombination der Merkmale der auf die Stellantriebe gerichteten Ansprüche und/oder durch Kombination der in der Beschreibung und/oder in der nachfolgenden Figurenbeschreibung enthaltenen Merkmale. Es zeigen in teilweise stark schematisierter Darstellung:
- Fig. 1: eine Seitenansicht eines Stellantriebs, wobei in einem unteren von zwei Stellantriebsgehäuseteilen ein Montagefenster zur Durchführung eines Anschlusskabels zu erkennen ist,
- Fig. 2: eine geschnittene Seitenansicht des in Fig. 1 dargestellten Stellantriebs,
- Fig. 3 und 4:: unterschiedliche perspektivische Ansichten des unteren Stellantriebsgehäuseteils,

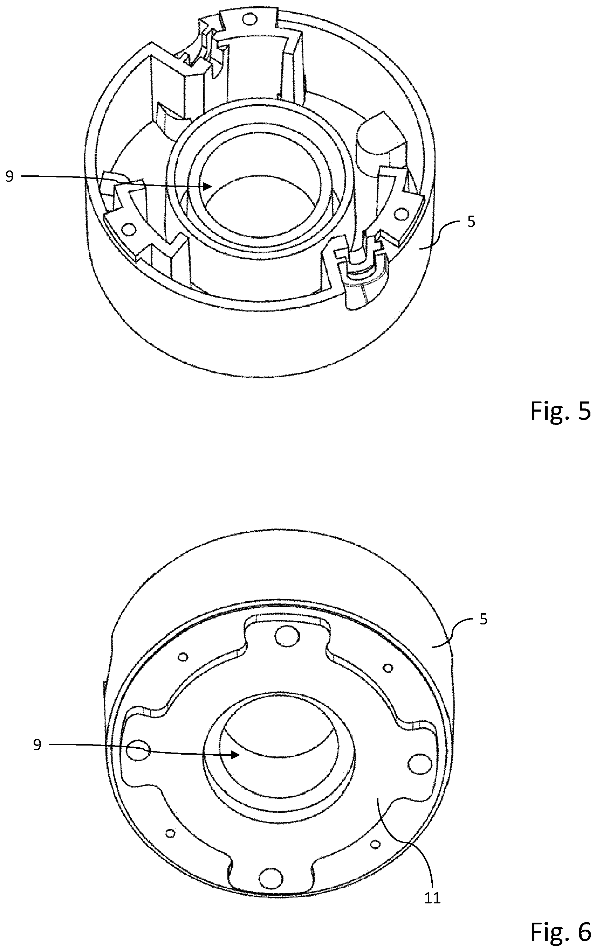

- Fig. 5 und 6:: unterschiedliche Ansichten eines Bauteilträgers, der gemäß der Schnittansicht aus Fig. 2 im unteren Stellantriebsgehäuseteil angeordnet ist,
- Fig. 7:: eine Einzelteildarstellung eines Spannmittels in Form eines Spannverschlusses des Stellantriebs, wobei der Spannverschluss eine Halteklammer, eine Rundmutter und eine mit der Rundmutter verbundene Spannschraube umfasst,
- Fig. 8:: der in Fig. 7 gezeigte Spannverschluss in Gebrauchsstellung an dem in den vorherigen Figuren dargestellten Stellantrieb,
- Fig. 9:: eine perspektivische Ansicht des unteren Stellantriebsgehäuseteils mit einer das Montagefenster verschließenden Verschlussblende, an der zwei Kabeldurchführungen ausgebildet sind,
- Fig. 10:: eine perspektivische Vorderansicht der in Fig. 9 gezeigten Verschlussblende mit ihren beiden Kabeldurchführungen,
- Fig. 11:: eine perspektivische Rückansicht der in Fig. 10 gezeigten Verschlussblende,
- Fig. 12:: eine perspektivische Ansicht eines axialen Ausgleichselements, dessen Verformung zur Messung anliegender Kräfte oder Momente, insbesondere eines Drehmoments, mittels eines Sensors erfassbar ist, sowie
- Fig. 13:: eine Prinzipskizze eines Stellantriebs mit einem Stellantriebsgehäuse, zwei darin befindlichen Bauteilträgern, wobei an dem oberen Bauteilträger ein Antriebsmotor und zwischen den Bauteilträgern ein Getriebe und ein axiales Ausgleichselement angeordnet sind.

Sämtliche Figuren zeigen zumindest Teile eines im Ganzen mit 1 bezeichneten Stellantriebs.

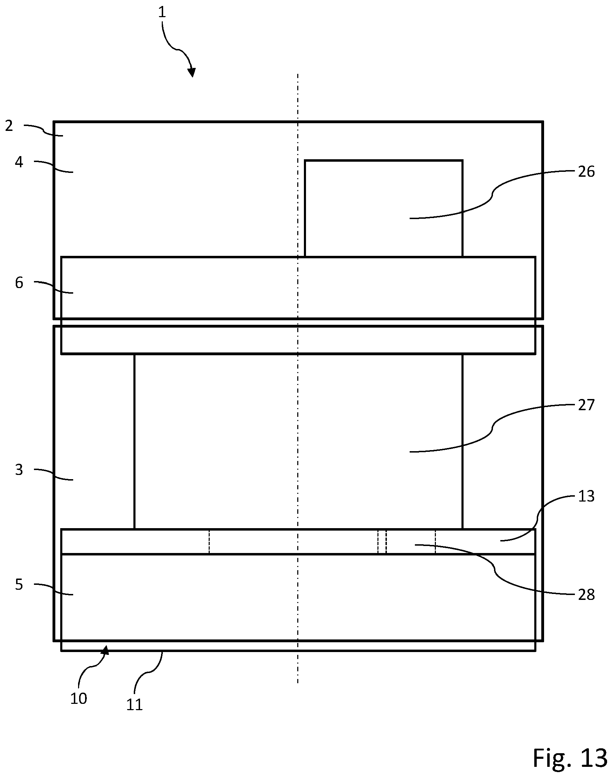

Jeder der gezeigten Stellantriebe 1 weist ein Stellantriebsgehäuse 2 auf, das ein unteres topfförmiges Stellantriebsgehäuseteil 3 und ein oberes topfförmiges Stellantriebsgehäuseteil 4 umfasst. Innerhalb des Stellantriebsgehäuses 2 sind bei den in den Figuren gezeigten Ausführungsbeispielen der Stellantriebe 1 zwei Bauteilträger 5 und 6 angeordnet. Die Bauteilträger 5 und 6 dienen dazu, Funktionselemente, nämlich einen Antriebsmotor 26 und ein Getriebe 27 des Stellantriebs 1 zu tragen. Aus der Prinzipskizze der Figur 13 sind die Anordnung des Antriebsmotors 26 an dem oberen Bauteilträger 6 und die Anordnung des Getriebes 27 zwischen den Bauteilträgern 5 und 6 ersichtlich.

An dem oberen Bauteilträger 6 der beiden Bauteilträger 5 und 6 sind nicht nur der Antriebsmotor 26 des Stellantriebs 1 angeordnet, sondern auch beide Stellantriebsgehäuseteile 3 und 4. Sowohl der Antriebsmotor 26 des Stellantriebs 1 als auch die beiden Stellantriebsgehäuseteile 3 und 4 sind an dem oberen Bauteilträger 6 befestigt.

Beide Stellantriebsgehäuseteile 3 und 4 bestehen aus einem dünnwandigen Material mit einer Materialstärke von höchstens vier Millimetern, vorzugsweise von höchstens zwei Millimetern. Je nach Bedarf können die beiden Stellantriebsgehäuseteile 3 und 4 dabei aus Metallblech, beispielsweise aus Edelstahlblech, oder auch aus Kunststoff bestehen. Der obere Bauteilträger 6 der beiden Bauteilträger 5 und 6 weist einen Befestigungsflansch 7 auf. An dem Befestigungsflansch 7 sind die beiden Stellantriebsgehäuseteile 3 und 4 des Stellantriebsgehäuses 2 befestigt. Zwischen dem Befestigungsflansch 7 und den beiden Stellantriebsgehäuseteilen 3 und 4 ist jeweils eine Dichtung, beispielsweise ein O-Ring vorgesehen, mit dem das geschlossene Stellantriebsgehäuse 2 beispielsweise gegen den Eintritt von Feuchtigkeit abgedichtet ist.

Der untere Bauteilträger 5 ist an einem Topfboden 8 des unteren Stellantriebsgehäuseteils 3 angeordnet.

Zumindest der untere Bauteilträger 5 der beiden Bauteilträger 5 und 6 bildet ein Lager 9 für eine in den Figuren nicht gezeigte Abtriebswelle des Stellantriebs 1. Der Antriebsmotor 26 des Stellantriebs 1 stützt sich mit seinem Motorgehäuse an dem oberen Bauteilträger 6 ab. Die Abstützung des Antriebsmotors 26 des Stellantriebs 1 ist so ausgestaltet, dass beide Stellantriebsgehäuseteile 3 und 4 in Bezug auf ein von dem Antriebsmotor 26 entwickeltes Antriebsmoment unbelastet bleiben.

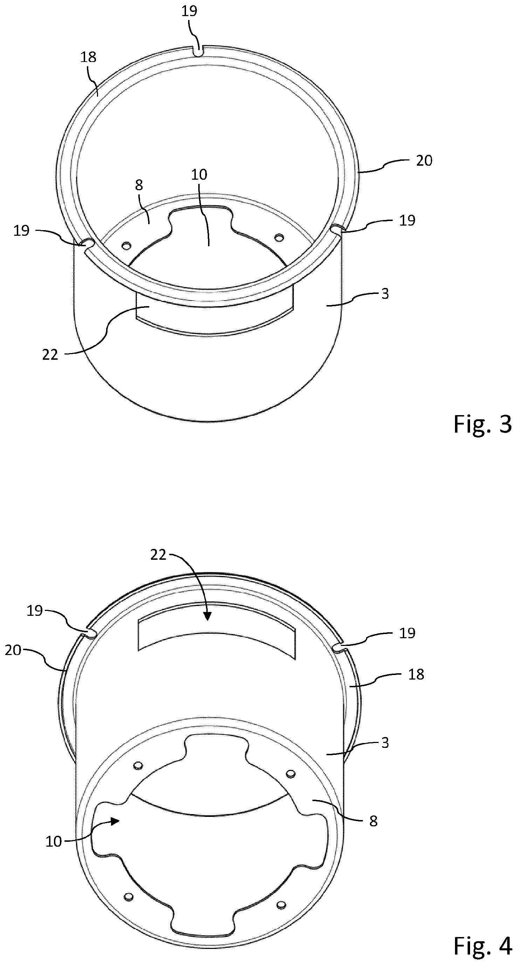

Der untere Bauteilträger 5 der beiden Bauteilträger 5 und 6 durchgreift das Stellantriebsgehäuse 2. Hierfür weist das untere Stellantriebsgehäuseteil 3 eine besonders gut in Fig. 4 zu erkennende Öffnung 10 auf. Der untere Bauteilträger 5 weist an seinem aus dem Stellantriebsgehäuse 2 ragenden Abschnitt eine Montageschnittstelle 11 für eine Armatur und/oder ein Folgegetriebe auf. Der obere Bauteilträger 6 ist nicht nur als Motorträger, sondern auch als Elektronikträger ausgebildet.

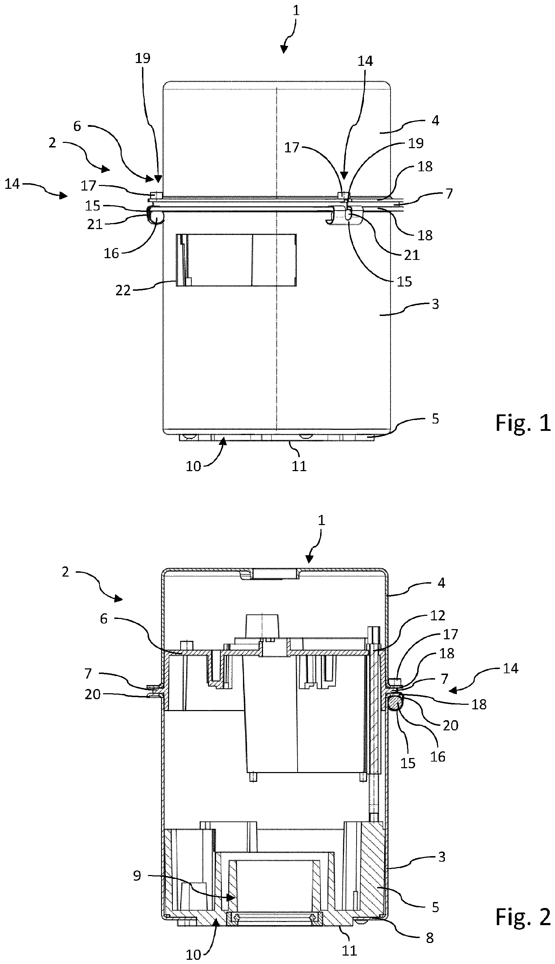

Die Schnittdarstellung gemäß Fig. 2 verdeutlicht, dass der obere Bauteilträger 6 über ein Stellelement 12 mit dem unteren Bauteilträger 5 verbunden ist. Das Stellelement 12 dient dazu, einen in den Figuren nicht gezeigten Begrenzungsanschlag des Stellantriebs 1 verstellen zu können, ohne den unteren Bauteilträger 5 aus dem unteren Stellantriebsgehäuseteil 3 entnehmen zu müssen. Zur Verstellung reicht es aus, das obere Stellantriebsgehäuseteil 4 von dem unteren Stellantriebsgehäuseteil 3 abzunehmen. Die Darstellung aus Fig. 2 verdeutlicht, dass hierdurch ein Betätigungsende des Stellelements 12 für einen Benutzer des Stellantriebs zugänglich wird.

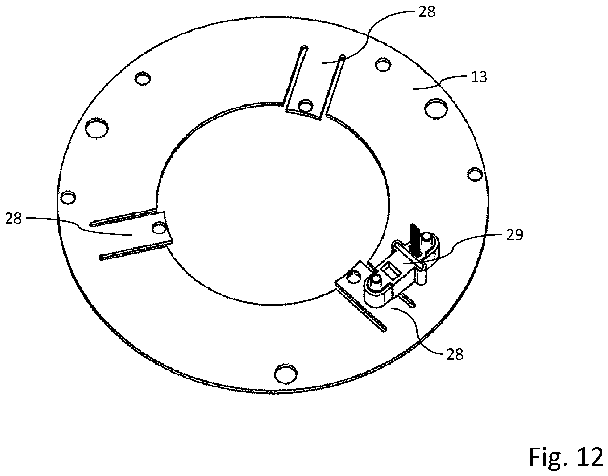

Der obere Bauteilträger 6 weist ein axiales Ausgleichselement 13 auf. Das axiale Ausgleichselement 13 ist als separates Teil in Fig. 12 dargestellt und auch in der Prinzipskizze der Fig. 13 zu erkennen. Das axiale Ausgleichselement 13 umfasst drei federnde Zungen 28, die einen axialen Ausgleich oder eine axiale Verlagerung der an dem axialen Ausgleichselement 13 angeordneten Bauteile, hier des Getriebes 27, innerhalb des Stellantriebsgehäuses 2 erlauben. Gemäß Figur 12 ist eine der Zungen 28 mit einem Sensor 29 versehen. Der Sensor 29 kann eine Verformung und/oder eine Bewegung des axialen Ausgleichselements 13 bzw. der Zunge 28 erfassen. Aus der Verformung bzw. Bewegung können anliegende Kräfte und/oder Momente und/oder Drehmomente abgeleitet werden.

Der obere Bauteilträger 6 zumindest zum Teil jenseits einer Trennebene der beiden Stellantriebsgehäuseteile 3 und 4 angeordnet. So sind der Bauteilträger 6 und daran angeordnete Funktionselemente zugänglich, wenn das obere Stellantriebsgehäuseteil 4 von dem unteren Stellantriebsgehäuseteil 3 abgenommen, das Stellantriebsgehäuse 2 also geöffnet ist.

Wie bereits zuvor ausgeführt, durchgreift der untere Bauteilträger 5 das untere Stellantriebsgehäuseteil 3 axial. Der untere Bauteilträger 5 weist an einer aus dem unteren Stellantriebsgehäuseteil 3 ragenden Stirnseite als Montageschnittstelle 11 eine Flanschfläche für einen Armaturenflansch auf.

Das Stellantriebsgehäuse 2 ist, wie bereits zuvor ausgeführt wurde, mit einer Dichtung abgedichtet. Die Dichtung umfasst hier zumindest zwei O-Ringe, die in den Figuren nicht dargestellt sind, jedoch zwischen den beiden Stellantriebsgehäuseteilen 3 und 4 und dem Befestigungsflansch 7 des oberen Bauteilträgers 6 angeordnet sind. Die Dichtung kann dabei entlang einer umlaufenden Linie angeordnet sein. Die umlaufende Linie kann hierbei durch eine Abbiegung der jeweils topfförmigen Stellantriebsgehäuseteile 3 und 4 gebildet sein.

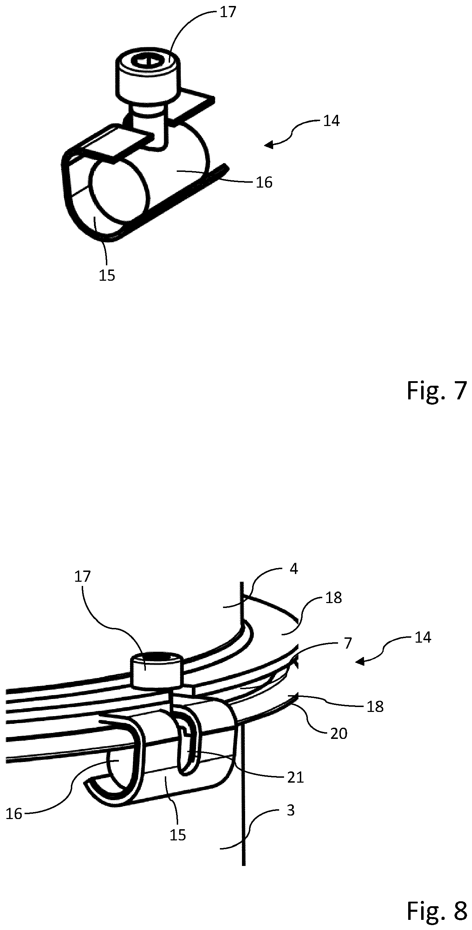

Die beiden Stellantriebsgehäuseteile 3 und 4 sind mittels insgesamt dreier Spannmittel 14, die jeweils als Spannverschlüsse ausgebildet sind, miteinander und mit dem oberen Bauteilträger 6 verbunden. Eines der Spannmittel 14 ist in Fig. 7 separat dargestellt. Gemäß Fig. 7 weist das Spannmittel 14 eine Halteklammer 15, eine mit der Halteklammer 15 gehaltene Rundmutter 16 sowie eine Spannschraube 17 auf. Die Rundmutter 16 wird in der Halteklammer 15 drehbar gehalten, so dass die Spannschraube 17 aus einer Lösestellung in ihre in den Fig. 7 und 8 gezeigte Spannstellung bewegt werden kann.

Beide Stellantriebsgehäuseteile 3 und 4 weisen jeweils einen Flansch 18 auf. Die Flansche 18 sind mit jeweils insgesamt drei randseitig offenen Schlitzen 19 zur Aufnahme der Spannschrauben 17 der Spannmittel 14 versehen. Das untere Stellantriebsgehäuseteil 3 ist mit einem Haltewulst 20 für die Halteklammern 15 der Spannmittel 14 versehen. Der Haltewulst 20 ist dabei an dem Flansch 18 des unteren Stellantriebsgehäuseteils 3 ausgebildet. Die Halteklammern 15 der Spannmittel 14 sind in den Haltewulst 20 eingeclipst. Der Haltewulst 20 dient somit dazu, die Halteklammern 15 verlustsicher an dem unteren Stellantriebsgehäuseteil 3 zu befestigen. Der Haltewulst 20 kann beispielsweise durch eine Haltebördelung 20 gebildet sein. Der Haltewulst 20 ist beispielsweise in Fig. 8 gut zu erkennen.

Jede der Halteklammern 15 weist eine mittige Aussparung 21 auf. Die Aussparung 21 dient dazu, die Rundmutter 16 mit der Spannschraube 17 innerhalb der jeweiligen Halteklammer 15 zwischen einer Lösestellung oder Offenstellung und der Spannstellung zu bewegen.

Das Stellantriebsgehäuse 2 der in den Figuren gezeigten Stellantriebe 1, hier genauer das untere Stellantriebsgehäuseteil 3 der beiden Stellantriebsgehäuseteile 3 und 4, ist mit einem Montagefenster 22 ausgestattet. Das Montagefenster 22 dient der Durchführung eines in den Figuren nicht gezeigten Anschlusskabels aus dem Inneren des Stellantriebsgehäuses 2 und damit einer vereinfachten Montage des Stellantriebs 1 und einer vereinfachten elektrischen Verkabelung der innerhalb des Stellantriebsgehäuses 2 angeordneten Funktionselemente, insbesondere des Antriebsmotors 26 des Stellantriebs 1.

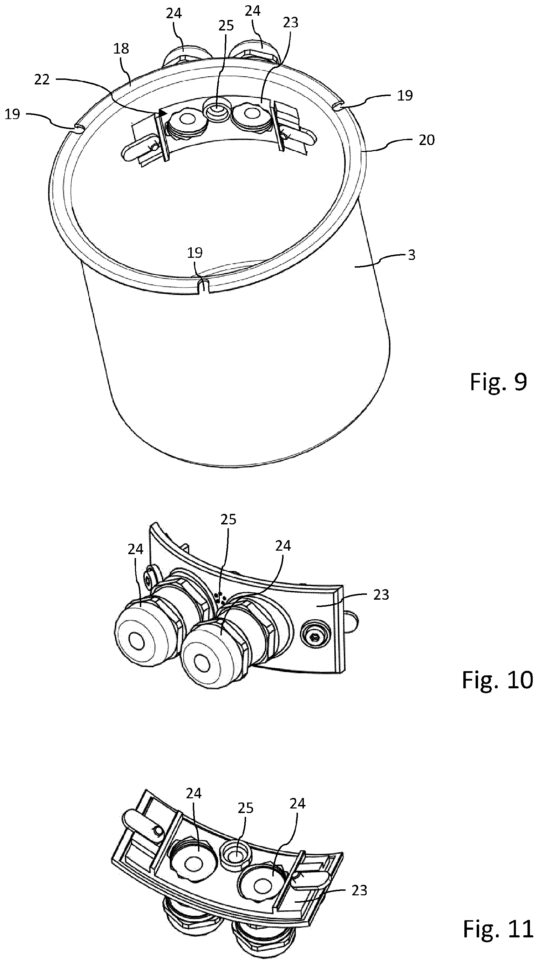

Die Stellantriebe 1 sind mit einer Verschlussblende 23 ausgestattet, mit der das jeweilige Montagefenster 22 nach erfolgtem elektrischem Anschluss des Stellantriebs 1 verschlossen werden kann. Die in den Figuren gezeigte Verschlussblende 23 weisen zwei Kabeldurchführungen 24 für Anschlusskabel des Stellantriebs 1 auf. Die Figuren 10 und 11 zeigen die Verschlussblende 23 mit ihren beiden Kabeldurchführungen 24. Die Verschlussblende 23 kann bei ansonsten geschlossenem Stellantriebsgehäuse 2 von außen gelöst und vollständig entfernt werden.

Gemäß Figur 10 ist die Verschlussblende 23 mit mehreren Be- und/oder Entlüftungslöchern 25 ausgestattet. Über die Be- und/oder Entlüftungslöcher 25 ist ein Austausch zwischen dem Inneren des Stellantriebsgehäuses 2 und der Umgebung möglich. Auf der Innenseite der Entlüftungslöcher 25 ist ein Druckausgleichselement angeordnet, sodass nur Luft, insbesondere nur feuchte Luft, jedoch kein flüssiges Wasser ein- und austreten kann.

Die beiden an der Verschlussblende 23 vorhandenen Kabeldurchführungen 24 sind als Kabelverschraubungen ausgebildet.

Die Erfindung befasst sich mit Verbesserungen auf dem technischen Gebiet der Stellantriebe. Hierzu wird unter anderem ein Stellantrieb 1 vorgeschlagen, dessen Stellantriebsgehäuse 2 zumindest ein Stellantriebsgehäuseteil 3 oder 4 aufweist. Innerhalb des Stellantriebsgehäuses 2 ist wenigstens ein Bauteilträger 5 oder 6 angeordnet, der als Tragstruktur für zumindest ein Funktionselement des Stellantriebs dient. An dem Bauteilträger 5 oder 6 ist ferner das zumindest eine Stellantriebsgehäuseteil 3 oder 4 befestigt.

### Bezugszeichenliste

- 1: Stellantrieb
- 2: Stellantriebsgehäuse
- 3: unteres Stellantriebsgehäuseteil
- 4: oberes Stellantriebsgehäuseteil
- 5: unterer Bauteilträger
- 6: oberer Bauteilträger
- 7: Befestigungsflansch
- 8: Topfboden
- 9: Lager
- 10: Öffnung in 3
- 11: Montageschnittstelle an 5
- 12: Stellelement
- 13: Ausgleichselement
- 14: Spannmittel
- 15: Halteklammer
- 16: Rundmutter
- 17: Spannschraube
- 18: Flansch an 3 und 4
- 19: Schlitz
- 20: Haltebördelung
- 21: Aussparung
- 22: Montagefenster
- 23: Verschlussblende
- 24: Kabeldurchführungen
- 25: Be- und/oder Entlüftungsloch
- 26: Antriebsmotor
- 27: Getriebe
- 28: Zunge an 13
- 29: Sensor an 13

## Patentansprüche

1. Stellantrieb (1) mit einem wenigstens ein vorzugsweise topfförmiges Stellantriebsgehäuseteil (3,4), insbesondere zumindest zwei vorzugsweise jeweils topfförmiges Stellantriebsgehäuseteile (3,4), umfassenden Stellantriebsgehäuse (2), wobei der Stellantrieb (1) wenigstens einen innerhalb des Stellantriebsgehäuses (2) angeordneten Bauteilträger (5,6) aufweist, der zumindest ein Funktionselement, insbesondere einen Antriebsmotor (26) und/oder ein Getriebe (27), des Stellantriebs (1) trägt, und an dem das wenigstens eine Stellantriebsgehäuseteil (3,4), insbesondere die zumindest zwei Stellantriebsgehäuseteile (3,4), befestigt ist.

2. Stellantrieb (1), insbesondere nach Anspruch 1, wobei zumindest ein vorzugsweise topfförmiges Stellantriebsgehäuseteil (3,4) eines Stellantriebsgehäuses des Stellantriebs (1) aus einem dünnwandigen Material mit einer Materialstärke von höchstens vier Millimetern, insbesondere von höchstens zwei Millimetern, hergestellt ist und/oder wobei zumindest ein Stellantriebsgehäuseteil (3,4) aus einem Metallblech, insbesondere aus einem Edelstahlblech, und/oder wobei zumindest ein Stellantriebsgehäuseteil (3,4) aus Kunststoff besteht.

3. Stellantrieb (1) nach Anspruch 1 oder 2, wobei der Bauteilträger (5,6) oder ein weiterer Bauteilträger (5,6) einen Befestigungsflansch (7) aufweist, an dem das zumindest eine Stellantriebsgehäuseteil (3,4), insbesondere die zumindest zwei Stellantriebsgehäuseteile (3,4) des Stellantriebsgehäuses (2) befestigt sind, insbesondere wobei zwischen dem Befestigungsflansch (7) und dem zumindest einen Stellantriebsgehäuseteil (3,4) eine Dichtung, insbesondere ein O-Ring, angeordnet ist, und/oder wobei ein oder der Bauteilträger (5,6) an einem Topfboden (8) eines Stellantriebsgehäuseteils (3,4) des Stellantriebsgehäuses (2) angeordnet ist.

4. Stellantrieb (1) nach einem der vorherigen Ansprüche, wobei der Bauteilträger (5,6) ein Lager (9) für eine Abtriebswelle des Stellantriebs (1) bildet und/oder aufweist.

5. Stellantrieb (1) nach einem der vorherigen Ansprüche, wobei ein Antriebsmotor des Stellantriebs (1), insbesondere ein Motorgehäuse des Stellantriebs (1), an einem Bauteilträger (5,6) abgestützt und/oder angeordnet ist, und/oder wobei das wenigstens eine Stellantriebsgehäuseteil (3,4) in Bezug auf ein von dem oder einem Antriebsmotor entwickeltes Antriebsmoment unbelastet ist.

6. Stellantrieb (1) nach einem der vorherigen Ansprüche, wobei der Bauteilträger (5,6) das Stellantriebsgehäuse (2) durchgreift, insbesondere wobei der Bauteilträger (5,6) an seinem aus dem Stellantriebsgehäuse (2) ragenden Abschnitt eine Montageschnittstelle (11) für eine Armatur und/oder ein Folgegetriebe aufweist.

7. Stellantrieb (1) nach einem der vorherigen Ansprüche, wobei der wenigstens eine Bauteilträger (5,6) als Elektronikträger und/oder Motorträger ausgebildet ist und/oder wobei der Stellantrieb (1) einen Elektronikträger und/oder Motorträger aufweist, der innerhalb des Stellantriebsgehäuses (2) angeordnet ist, vorzugsweise wobei der Elektronikträger und/oder der Motorträger an dem Bauteilträger (5,6) angeordnet und/oder an diesem befestigt und/oder mit diesem verbunden ist.

8. Stellantrieb (1) nach einem der vorherigen Ansprüche, wobei der Stellantrieb, insbesondere an dem Bauteilträger zumindest ein axiales Ausgleichselement (13), insbesondere eine Axialfeder aufweist.

9. Stellantrieb (1) nach einem der vorherigen Ansprüche, wobei ein Bauteilträger (5,6), insbesondere der Elektronikträger, jenseits einer Trennebene von zumindest zwei Stellantriebsgehäuseteilen (3,4), sodass der Bauteilträger (6) zugänglich ist, wenn eines der zumindest zwei Stellantriebsgehäuseteile (3,4) von dem zumindest einen anderen Stellantriebsgehäuseteil (3,4) abgenommen ist, und/oder wobei wenigstens ein Bauteilträger (5,6) das Stellantriebsgehäuseteil (3,4) axial durchgreift und eine Flanschfläche für einen Armaturenflansch ausbildet.

10. Stellantrieb (1) nach einem der vorherigen Ansprüche, wobei das Stellantriebsgehäuse (2) mit einer Dichtung, insbesondere mit einem O-Ring, abgedichtet ist, insbesondere wobei die Dichtung entlang einer umlaufenden Linie angeordnet ist, insbesondere wobei die umlaufende Linie durch eine Abbiegung, eines vorzugsweise topfförmigen Stellantriebsgehäuseteils (3,4) gebildet ist.

11. Stellantrieb (1) nach einem der vorherigen Ansprüche, wobei zumindest ein topfförmiges Stellantriebsgehäuseteil (3,4) aus dünnwandigem Material besteht.

12. Stellantrieb (1) nach einem der vorherigen Ansprüche, wobei die zumindest zwei Stellantriebsgehäuseteile (3,4) mittels wenigstens eines Spannmittels (14), insbesondere mittels wenigstens eines Spannverschlusses, miteinander und/oder mit dem Bauteilträger (5,6), insbesondere mit seinem Befestigungsflansch (7), verbunden sind.

13. Stellantrieb (1) nach einem der vorherigen Ansprüche, wobei das zumindest eine Stellantriebsgehäuseteil (3,4), insbesondere die beiden Stellantriebsgehäuseteile (3,4), einen Flansch (18) aufweist/aufweisen, vorzugsweise wobei der Flansch / die Flansche (18) jeweils wenigstens einen randseitig offenen Schlitz (19) zur Aufnahme einer Spannschraube (17) eines Spannmittels (14) aufweisen.

14. Stellantrieb (1) nach einem der vorherigen Ansprüche, wobei das Spannmittel (14) eine Halteklammer (15), eine mit der Halteklammer (15) gehaltene Rundmutter (16) und eine Spannschraube (17) umfasst, wobei die Rundmutter (16) in der Halteklammer (15) drehbar ist, um die Spannschraube (17) in eine Spannstellung zu bewegen.

15. Stellantrieb (1) nach dem vorherigen Anspruch, wobei zumindest ein Stellantriebsgehäuseteil (3,4) einen Haltewulst und/oder eine Haltebördelung (20) für die Halteklammer (15) aufweist, insbesondere an einem oder dem Flansch (18) des Stellantriebsgehäuseteils (3,4).

16. Stellantrieb (1) nach einem der beiden vorherigen Ansprüche, wobei die Halteklammer (15) eine vorzugsweise mittige Aussparung (21) aufweist, sodass die Rundmutter (16) mit der Spannschraube (17) innerhalb der Halteklammer (15) zwischen einer Offenstellung und der Spannstellung bewegbar ist.

17. Stellantrieb (1), insbesondere nach einem der vorherigen Ansprüche, wobei ein oder das Stellantriebsgehäuse (2) des Stellantriebs (1), insbesondere zumindest ein Stellantriebsgehäuseteil (3,4), ein Montagefenster (22) zur Durchführung eines Anschlusskabels aus dem Inneren des Stellantriebsgehäuses (2) aufweist.

18. Stellantrieb (1) nach dem vorherigen Anspruch, wobei der Stellantrieb (1) eine Verschlussblende (23) aufweist, in der zumindest eine Kabeldurchführung (24) für ein Anschlusskabel ausgebildet ist und mit der das Montagefenster (22) nach Montage des Stellantriebs (1) verschließbar und/oder verschlossen ist, insbesondere wobei die Verschlussblende (23) von außen lösbar und/oder vollständig entfernbar ist.

19. Stellantrieb (1) nach dem vorherigen Anspruch, wobei die Verschlussblende (23) zumindest ein Be- und/oder Entlüftungsloch (25) aufweist, insbesondere wobei das Be- und/oder Entlüftungsloch (25) ein Druckausgleichselement aufweist, das luftdurchlässig und/oder dampfdurchlässig, jedoch wasserundurchlässig ist.

20. Stellantrieb (1) nach einem der vorherigen Ansprüche, wobei zumindest eine Kabeldurchführung (24) der Verschlussblende (23) als Kabelverschraubung und/oder wobei zumindest eine Kabeldurchführung (24) der Verschlussblende (23) als Steckverbindung ausgebildet ist.
